Europäisches Patentamt

European Patent Office

Office européen des brevets

(19)

(11) **EP 0 843 864 B1**

(12) **EUROPÄISCHE PATENTSCHRIFT**

(45) Veröffentlichungstag und Bekanntmachung des Hinweises auf die Patenterteilung:
**03.04.2002  Patentblatt 2002/14**

(51) Int Cl.$^7$: **G06K 9/52**

(21) Anmeldenummer: **97925829.0**

(22) Anmeldetag: **24.04.1997**

(86) Internationale Anmeldenummer:
**PCT/DE97/00836**

(87) Internationale Veröffentlichungsnummer:
**WO 97/41529 (06.11.1997 Gazette 1997/47)**

(54) **VERFAHREN ZUM KLASSIFIZIEREN UND WIEDERERKENNEN VON MUSTERN, WOBEI EINE SIGNATUR DURCH DAS GLÄTTEN EINES POLYGONZUGS ERZEUGT WIRD**

METHOD OF CLASSIFICATION AND RECOGNITION OF PATTERNS ACCORDING TO WHICH A SIGNATURE IS PRODUCED BY SMOOTHING A POLYGON OUTLINE

PROCEDE DE CLASSIFICATION ET D'IDENTIFICATION DE MODELES SELON LEQUEL UNE SIGNATURE EST PRODUITE PAR LISSAGE D'UN CONTOUR POLYGONAL

(84) Benannte Vertragsstaaten:
**DE FR GB**

(30) Priorität: **25.04.1996  DE 19616565**

(43) Veröffentlichungstag der Anmeldung:
**27.05.1998  Patentblatt 1998/22**

(73) Patentinhaber: **Definiens AG.**
**80331 München (DE)**

(72) Erfinder: **SCHMIDT, Günter**
**D-82008 Unterhaching (DE)**

(74) Vertreter: **Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) Entgegenhaltungen:
**DE-A- 19 507 564**

- **LEU J -G ET AL: "Polygonal approximation of 2-D shapes through boundary merging" PATTERN RECOGNITION LETTERS, APRIL 1988, NETHERLANDS, Bd. 7, Nr. 4, ISSN 0167-8655, Seiten 231-238, XP002040927**

## Beschreibung

Die vorliegende Erfindung betrifft ein Verfahren zum Klassifizieren und Wiedererkennen von Mustern und insbesondere ein Verfahren, mit dem ein Muster mit Hilfe eines Klassifikationsvektors, der sich nach der Fraktalität des jeweiligen Musters unterscheidet, klassifiziert werden kann.

Die Mustererkennung stellt in vielen technischen Gebieten ein zentrales Problem dar. Eine derartige Mustererkennung soll es ermöglichen, m-dimensionale Objekte mittels einer Datenverarbeitungseinrichtung in der Weise zu erfassen, daß die Datenverarbeitungseinrichtung mit möglichst hoher Präzision bestimmen kann, welchem m-dimensionalen Objekt das jeweilige Muster zuzuordnen ist. Eine hochpräzise Mustererkennung m-dimensionaler Objekte würde es beispielsweise gestatten, Fahrzeuge jeder Art automatisch zu lenken, so daß durch menschliches Versagen hervorgerufene Unfälle weitgehend vermieden werden könnten. Darüber hinaus wäre es möglich, die Handschrift einer beliebigen Person automatisch und mit hoher Präzision zu erkennen. Auch die Herstellung von Automaten oder Robotern, die mit einer intelligenten Sensorik ausgestattet sind, wäre bei einer hochpräzisen Mustererkennung kein Problem. Weitere Anwendungsbereiche liegen zum Beispiel in der Erkennung von Konturlinien in der Form von Rot-Grün-Blau-Farbdaten, eines Symbols bei einer Symboleingabe über ein druckempfindliches Graphiktablett oder von Mono-Audio-Daten, usw.. Viele andere Anwendungen sind ebenso denkbar.

Im Stand der Technik sind bereits zahlreiche Verfahren zur Mustererkennung bekannt. Ein Nachteil der bekannten Verfahren liegt jedoch darin, daß sie jeweils nur für spezielle Arten von Objekten verwendbar sind. Die allgemeine Verwendbarkeit dieser bekannten Verfahren ist somit stark eingeschränkt. Ein weiterer Nachteil der bekannten Verfahren liegt darin, daß insbesondere das sichere Erkennen hochkomplexer bzw. fraktaler Strukturen entweder gar nicht oder nur mit äußerst hoher Rechenleistung gelingt, so daß eine Mustererkennung in Echtzeit nicht möglich ist.

Oftmals ist es ebenso erforderlich, daß bei einer Mustererkennung bestimmte Merkmale des Objekts entweder gar nicht oder nur derart berücksichtigt werden, daß das tatsächliche Maß, das das Merkmal widerspiegelt, keine Rolle spielt. So ist es zum Beispiel vorstellbar, daß die tatsächliche räumliche Ausdehnung eines Objekts keine Rolle spielen soll, um zu ermöglichen, daß Objekte als gleich erkannt werden, die sich nur in ihrer räumlichen Größe unterscheiden.

Die Aufgabe der vorliegenden Erfindung besteht demgemäß darin, ein Verfahren zum Klassifizieren und Wiedererkennen von Mustern zu schaffen, das bei jeder Art eines Objekts verwendbar ist und das auf der Grundlage eines Klassifikationsvektors, der sich nach der Fraktalität des Objekts unterscheidet, Muster klassifiziert und wiedererkennt.

Diese Aufgabe wird durch die im Anspruch 1 angegebenen Maßnahmen gelöst.

Weitere vorteilhafte Ausgestaltungen der vorliegenden Erfindung ergeben sich aus den Unteransprüchen.

Insbesondere wird gemäß dem Verfahren nach Anspruch 1 ein Muster eines zu klassifizierenden und wiederzuerkennenden m-dimensionalen Objekts in der Form eines m-dimensionalen Polygonzugs geschaffen. Für jeden Punkt dieses Polygonzugs wird eine Eigenschaft erfaßt, die eindeutig eine Beziehung eines jeweiligen Punktes des Polygonzugs zu dem ihm vorhergehenden Punkt und dem ihm nachfolgenden Punkt widerspiegelt. Diese Eigenschaften für jeden Punkt werden miteinander verknüpft, um eine den Polygonzug eindeutig kennzeichnende Gesamteigenschaft zu erhalten. Anschließend wird der Polygonzug geglättet. Nachfolgend werden die Schritte des Erfassens, des Verknüpfens und des Glättens (k-1)-fach wiederholt, wobei k eine Ganzzahl darstellt. Unter Verwendung der gewonnenen Gesamteigenschaften, die in der Anzahl k vorliegen, wird eine Signatur für das Muster erzeugt. Diese Signatur wird zum Vergleichen mit Signaturen von bekannten Mustern verwendet, um einen Gleichheitsgrad zwischen den verglichenen Signaturen festzustellen.

Mittels diesem Verfahren besteht auf einfache Weise die Möglichkeit, ein Muster eines beliebigen m-dimensionalen Objekts aufgrund der Fraktalität des Musters nicht nur anhand einer Maßzahl der Fraktalität sondern mit einem ganzen Satz von Zahlen, also einem Vektor, der k Komponenten aufweist, zu klassifizieren. Weist der bei dem Verfahren verwendete Polygonzug n Punkte auf, wird folglich das Muster, das n Punkte und die Dimension m aufweist, durch einen Vektor mit k Komponenten klassifiziert, wordurch ein schneller und rechenextensiver Vergleich möglich ist. Da das Verfahren keine dimensionalen Einschränkungen aufweist, ist es außerdem bei beliebigen Objekten anwendbar. Durch geeignete Anwendung unterschiedlicher Bedingungen bzw. Forderungen beim Erfassen der Eigenschaft und der Glättung des Polygonzugs kann das Verfahren derart abgeändert werden, daß es bestimmte Merkmale des zu klassifizierenden und wiederzuerkennenden Musters entweder gar nicht oder zum Beispiel nur so berücksichtigt, daß maßstäbliche Unterschiede zwischen dem zu klassifiziereden und wiederzuerkennenden Muster und dem Muster eines bekannten Objekts unberücksichtigt bleiben. Dies bedeutet, das Verfahren ist für jeden denkbaren Anwendungsfall geeignet abänderbar.

Die Erfindung wird nachstehend anhand der Beschreibung von Ausführungsbeispielen unter Bezugnahme auf die Zeichnung näher erläutert.

Es zeigen:

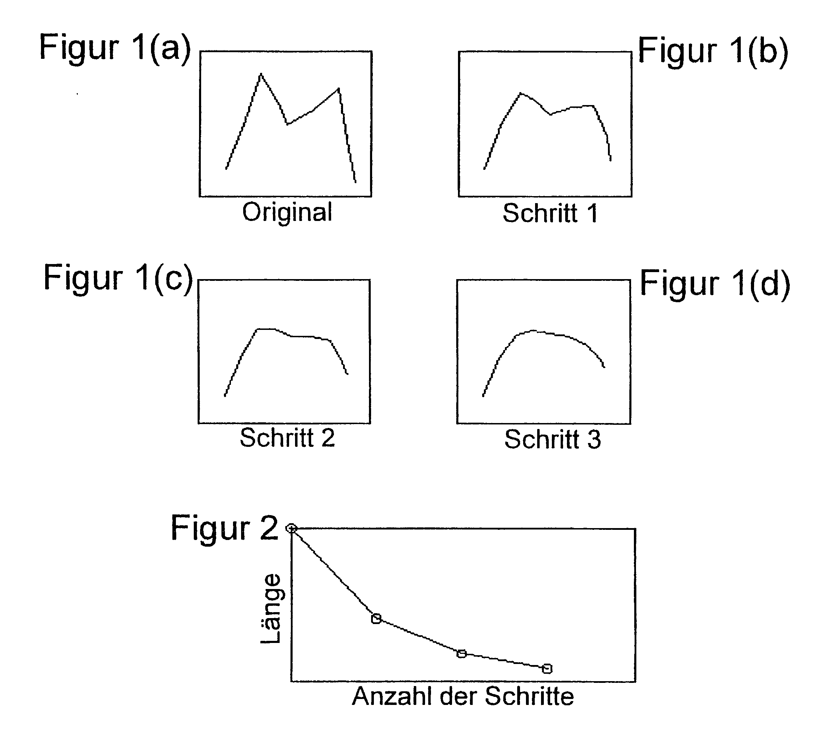

**Fig. 1(a) bis 1(d)**     eine Darstellung eines Glättens eines Polygonzugs gemäß einem ersten Ausführungsbeispiel der Erfindung;

| | |
|---|---|
| **Fig. 2** | eine graphische Darstellung einer Längenänderung in Abhängigkeit von Wiederholungsschritten des Glättens gemäß dem ersten Ausführungsbeispiel der vorliegenden Erfindung; |
| **Fig. 3(a) und 3(b)** | unterschiedlich komplexe bzw. fraktale Muster darstellende Abbildungen zur Verdeutlichung der Funktionsweise des Verfahrens gemäß dem ersten Ausführungsbeispiel der vorliegenden Erfindung; |
| **Fig. 4(a) und 4(b)** | die Signatur des in Fig. 3(a) bzw. 3(b) gezeigten Musters darstellende Abbildungen zur Verdeutlichung der Funktionsweise des ersten Ausführungsbeispiels der vorliegenden Erfindung; |
| **Fig. 5** | einen Polygonzug zur Verdeutlichung der Funktionsweise eines Verfahrens gemäß einem zweiten Ausführungsbeispiel der vorliegenden Erfindung; |
| **Fig. 6** | eine erste Möglichkeit zum Erfassen einer Eigenschaft eines jeweiligen Punktes auf dem Polygonzug gemäß dem zweiten Ausführungsbeispiel der vorliegenden Erfindung; |
| **Fig. 7** | eine zweite Möglichkeit zum Erfassen einer Eigenschaft eines jeweiligen Punktes auf dem Polygonzug gemäß dem zweiten Ausführungsbeispiel der vorliegenden Erfindung; |
| **Fig. 8** | die Abhängigkeit eines Maßes einer Gesamteigenschaft des Polygonzugs in Abhängigkeit eines Skalenparameters gemäß dem zweiten Ausführungsbeispiel der vorliegenden Erfindung; und |
| **Fig. 9** | die Abbildung einer beim Glätten des Polygonzugs verwendeten Gewichtsfunktion gemäß dem zweiten Ausführungsbeispiel der vorliegenden Erfindung. |

Es folgt die Beschreibung eines ersten Ausführungsbeispiels der vorliegenden Erfindung.

Das erste Ausführungsbeispiel der vorliegenden Erfindung erklärt die Funktionsweise des erfindungsgemäßen Verfahrens anhand eines zweidimensionalen Polygonzugs in der Ebene. Es ist jedoch anzumerken, daß das Verfahren nicht darauf beschränkt ist; vielmehr besteht ein Vorteil des erfindungsgemäßen Verfahrens darin, daß es bei beliebigen m-dimensionalen Polygonzügen ($1 < m < \infty$) angewendet werden kann.

Unter Bezugnahme auf die Figuren 1(a) bis 1(d) und Fig. 2 wird das erste Ausführungsbeispiel der Erfindung erklärt.

Zuerst wird durch ein an sich bekanntes Verfahren aus einer beliebigen m-dimensionalen Struktur ein m-dimensionaler Polygonzug erzeugt (in diesem Ausführungsbeispiel beträgt m = 2). Wie es in Fig. 1(a) dargestellt ist, besteht der zweidimensionale Polygonzug in diesem Ausführungsbeispiel aus dem Buchstaben "M". Danach wird eine erwünschte Eigenschaft des Polygonzugs erfaßt. Die erwünschte zu erfassende Eigenschaft bezüglich des Buchstaben "M" kann zum Beispiel ein Längenmaß sein. Folglich wird für jeden Punkt des Polygonzugs ein Längenmaß so definiert, daß es eindeutig eine Beziehung zwischen dem Punkt, der dem jeweiligen Punkt vorangeht, dem jeweiligen Punkt und dem Punkt, der dem jeweiligen Punkt nachfolgt, widerspiegelt. Im Falle dieses Ausführungsbeispiels wird das Längenmaß des jeweiligen Punktes so bestimmt, daß jedem Punkt die Hälfte des Abstands zu seinem Vorgänger und die Hälfte des Abstands zu seinem Nachfolger zugewiesen wird, also als die Euklidsche Länge. Dies wird für jeden Punkt des Polygonzugs durchgeführt. Die derart erfaßten Längenmaße werden zu einem den Polygonzug kennzeichnenden Gesamtlängenmaß verknüpft. Im Falle dieses Ausführungsbeispiels wird das Gesamtlängenmaß aus einer Aufsummation der erfaßten Längenmaße für jeden Punkt bestimmt.

Nachfolgend wird ein sogenanntes Glätten des Polygonzugs durchgeführt. Dies bedeutet in diesem Fall, daß aus mindestens den Koordinaten des einem jeweiligen Punkt vorhergehenden Punktes, des jeweiligen Punktes und des dem jeweiligen Punkt nachfolgenden Punktes auf dem Polygonzug ein neuer Punkt bestimmt wird. Dies wird wiederum für jeden Punkt des Polygonzugs durchgeführt. Daraus ergibt sich ein neuer Polygonzug $P_1$. Die Ermittlung des neuen Polygonzugs $P_1$ kann zum Beispiels mittels der folgenden Gleichung durchgeführt werden:

$$r_1(k) = \{r_0(k-1) + 2r_0(k) + r_0(k+1)\}/4 \tag{1}$$

In der vorhergehenden Gleichung (1) bezeichnet $r_1(k)$ die Koordinate des Punktes des neuen Polygonzugs $P_1$, $r_0(k-1)$ bezeichnet die Koordinate des dem jeweiligen Punkt auf dem vorhergehenden Polygonzug $P_0$ vorhergehenden Punktes und $r_0(k+1)$ bezeichnet die Koordinate des dem jeweiligen Punkt auf dem vorhergehenden Polygonzug $P_0$ nachfolgenden Punktes.

Wird die vorhergehende Gleichung (1) auf jeden Punkt des vorhergehenden Polygonzugs $P_0$ angewendet, ergibt sich der neue Polygonzug $P_1$. Nachfolgend werden die zuvor genannten Schritte ab dem Erfassen der erwünschten Eigenschaft für jeden Punkt des Polygonzugs wiederholt. Es können beliebig viele solche Durchläufe durchgeführt werden. Werden k-1 Durchläufe durchgeführt, ergeben sich somit k Gesamteigenschaften, wobei eine jeweilige Gesamteigenschaft einem jeweiligen Polygonzug $P_0$ bis $P_{k-1}$ zugewiesen ist. Das heißt, es ergibt sich ein Vektor mit k Komponenten, der eine Signatur des Objekts bzw. Musters darstellt, das durch den ursprünglichen Polygonzug dargestellt ist. In den Figuren 1(a) bis 1(d) ist das zuvor beschriebene Verfahren für drei Glättungsschritte (k = 0 bis 3) durchgeführt worden. Für jeden der Durchläufe ergibt sich somit eine Gesamteigenschaft, die in diesem Fall eine Länge darstellt. In Fig. 2 sind die aus den Figuren 1(a) bis 1(d) gewonnenen 4 Gesamteigenschaften graphisch bezüglich der Anzahl der Schritte aufgetragen. Die in Fig. 2 gezeigte Abbildung stellt für den Buchstaben "M", der in diesem Fall das zu klassifizierende und wiederzuerkennende Objekt bzw. Muster darstellt, die Signatur dar. Diese Signatur wird mit Signaturen von bekannten Mustern verglichen, um somit einen Gleichheitsgrad zwischen den verglichenen Signaturen festzustellen. Somit kann aus der Signatur bestimmt werden, was das ursprüngliche Objekt bzw. Muster war.

Es ist deweiteren möglich, die gewonnenen Gesamteigenschaften auf die Gesamteigenschaft des ursprünglichen Polygonzugs $P_0$ zu normieren. In diesem Fall werden Objekte bzw. Muster als gleich erkannt, die sich nur in ihrer Größe unterscheiden. Daß heißt, in dem Fall dieses Ausführungsbeispiels wird ein zu klassifizierendes und wiederzuerkennendes Objekt der Form des Buchstaben "M" als gleich zu einem bekannten Objekt der Form des Buchstabens "M" erkannt, daß um einen beliebigen Faktor größer oder kleiner als das zu klassifizierende und wiederzuerkennende Objekt ist, daß heißt, die beiden Objekte weisen einen unterschiedlichen Maßstab auf.

Es ist offensichtlich, daß das zuvor beschriebene Verfahren bei jedem beliebigen Objekt jeder beliebigen Dimension anwendbar ist. So kann es sich bei den Dimensionen zum Beispiel um Amplitude und Zeit bei Mono-Audio-Daten (m = 1 + 1 = 2), um Ort und Farbe bei Konturlinien von Objekten von Rot-Grün-Blau-Daten (m = Ort + Farbe = 2 + 3) oder um Ort, Zeit, Stift, Anpreßdruck bei einer Symboleingabe auf einem druckempfindlichen Graphiktablett (m = 2 + 1 + 1 = 4) handeln. Beliebig viele andere Anwendungen sind vorstellbar.

Im ersten Ausführungsbeispiel wurde ein Längenmaß als Eigenschaft verwendet. Dies ist jedoch nicht zwingend erforderlich. Jedes andere für das Objekt geeignete Maß oder eine beliebige Kombination geeigneter Maße kann bzw. können verwendet werden.

Eine herausragende Eigenschaft des erfindungsgemäßen Verfahrens besteht darin, daß es nach der Fraktalität des vorliegenden Polygonzugs, der ein Objekt bzw. ein Muster charakteristiert, unterscheidet. Dabei wird bei dieser Klassifikation des Objekts nicht nur eine einzige Maßzahl für die Fraktalität sondern ein ganzer Satz von Zahlen verwendet, daß heißt, der zuvor erwähnte Vektor mit k Komponenten.

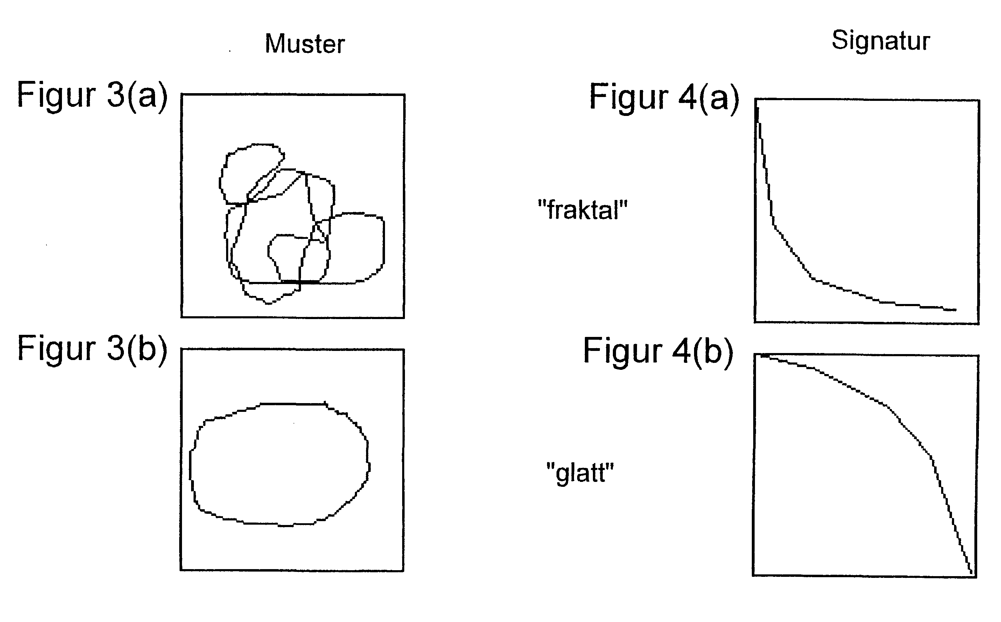

In den Figuren 3(a) und 3(b) sind zwei verschiedene zu klassifizierende Muster dargestellt. Dabei ist das Muster in Fig. 3(a) gegenüber dem Muster in Fig. 3(b) "fraktaler". Das Ergebnis eines Durchführens des gemäß dem ersten Ausführungsbeispiel beschriebenen Verfahrens an diesen Mustern ist in den Figuren 4(a) und 4(b) gezeigt, wobei die Signatur in Fig. 4(a) dem Muster in Fig. 3(a) zugehörig ist und die Signatur in Fig. 4(b) dem Muster in Fig. 3(b) zugehörig ist. Aus den Figuren 4(a) und 4(b) geht somit eindeutig hervor, daß das vorhergehende Verfahren sehr gut zwischen regelmäßigen bzw. glatten und unregelmäßigen bzw. fraktalen Strukturen unterscheidet.

Es folgt die Beschreibung eines zweiten Ausführungsbeispiels der vorliegenden Erfindung.

Im zweiten Ausführungsbeispiel der vorliegenden Erfindung wird zur Vereinfachung wiederum ein zweidimensionales Muster verwendet. Wie im ersten Ausführungsbeispiel wird für dieses zweidimensionale Muster wiederum ein zweidimensionaler Polygonzug erzeugt.

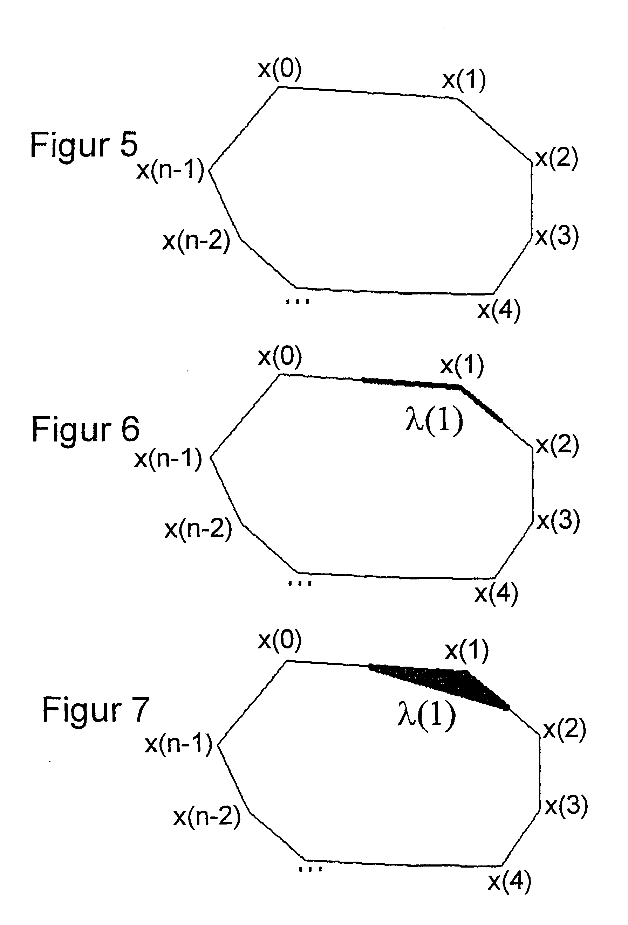

In Fig. 5 ist der im zweiten Ausführungsbeispiel verwendete Polygonzug dargestellt. Dieser Polygonzug weist die Anzahl n von Punkten x(0) bis x(n-1) auf. In Fig. 6 ist eine erste Möglichkeit zum Erfassen einer Eigenschaft eines jeweiligen Punktes des Polygonzugs dargestellt. Bei dieser Erfassung wird jedem jeweiligen Punkt des Polygonzugs die Euklidsche Länge zugewiesen. Das heißt, jedem Punkt x(i) wird die Hälfte des Abstands zu seinem Vorgänger x(i-1) und die Hälfte des Abstands zu seinem Nachfolger x(i+1) zugeordnet. Diese Zuordnung wird durch die folgende Gleichung (2) ausgedrückt:

$$\lambda(i,x(i)) = \tfrac{1}{2}\{|x(i+1) - x(i)| + |x(i) - x(i-1)|\} \qquad (2)$$

Hierin stellt $\lambda(i,x(i))$ die Eigenschaft bzw. das Maß des Punktes x(i) ($0 \leq i < n$) dar.

Es sind jedoch auch andere Möglichkeiten zur Erfassung einer Eigenschaft für jeden jeweiligen Punkt auf dem Polygonzug anwendbar. Eine dieser Möglichkeiten ist in Fig. 7 dargestellt. Hierbei wird die Quadratwurzel der Fläche des Dreiecks verwendet, welches von dem Punkt x(i) und seinen Nachbarn x(i-1) und x(i+1) auf geeignete Weise aufgespannt wird. Dies kann durch die folgende Gleichung (3) ausgedrückt werden:

$$\lambda(i,x(i)) = \sqrt{\tfrac{1}{2}|(x(i+1) - x(i)) \times (x(i) - x(i-1))|} \tag{3}$$

In dieser Gleichung (3) stellt das Symbol $\times$ zwischen den Klammerausdrücken das Kreuzprodukt dar.

Bei dem erfindungsgemäßen Verfahren können jedoch für die Erfassung der Eigenschaft jedes jeweiligen Punktes verschiedenste Verfahren verwendet werden, die die folgenden Kriterien erfüllen:

Die Eigenschaft bzw. das Maß $\lambda(i,x(i))$ jedes jeweiligen Punktes des Polygonzugs läßt sich eindeutig aus dem Punkt $x(i)$ und seinen Nachbarn $x(i-1)$ und $x(i+1)$ berechnen. Dabei sind die Eigenschaften bzw. Maße $\lambda(i,x(i))$ für nichtidentische Punkte $x(i-1)$, $x(i)$ und $x(i+1)$ positiv, wie es zum Beispiel in Fig. 6 und 7 zu sehen ist.

Soll das Verfahren in der Lage sein, daß es Muster, die sich lediglich in der Größe der Eigenschaft unterscheiden, als gleich erkennt, so muß gelten, daß $\lambda(i,a{*}x(i)) = a{*}\lambda(i,x(i))$ ist, wobei a eine Multiplikationskonstante darstellt.

Soll das Verfahren desweiteren in der Lage sein, daß es Muster als gleich erkennt, die sich in anderen Merkmalen als der Größe der Eigenschaft unterscheiden, müssen entsprechende Bedingungen hierfür abgeleitet werden. In vielen Anwendungsfällen kann es zum Beispiel erwünscht sein, daß die absolute Lage im m-dimensionalen Raum, in dem sich das Muster befindet, keine Rolle spielt. Diese Bedingung kann dadurch berücksichtigt werden, daß man die in Gleichung (2) ausgedrückte Bedingung verwendet. Das heißt allgemein, daß eine Bedingung verwendet wird, daß die Eigenschaft $\lambda(i,x(i))$ lediglich von $|x(i+1) - x(i)|$ und $|x(i) - x(i+1)|$ abhängig ist.

Verschiedene solche Forderungen bzw. Bedingungen sind mittels des erfindungsgemäßen Verfahrens realisierbar. Zum Beispiel könnte es neben der zuletzt erwähnten Bedingung der Nichtberücksichtung der absoluten Lage im m-dimensionalen Raum des Musters, daß heißt folglich einer Verschiebung bzw. Translation, erwünscht sein, daß Muster als gleich erkannt werden, welche lediglich verdreht zueinander sind, daß heißt, zwischen den Mustern im m-dimensionalen Raum besteht die Möglichkeit einer Überdeckung mittels einer Drehung bzw. Rotation. Auch diese Möglichkeit kann neben anderen durch eine geeignete Bedingung gewährleistet sein.

Schließlich ist jede vorstellbare Kombination von Bedingungen, wie sie zum Beispiel vorhergehend aufgeführt worden sind, bei diesem Verfahren anwendbar, wodurch das erfindungsgemäße Verfahren für jede beliebige Art eines Musters, welches zu klassifizieren und wiederzuerkennen ist, anwendbar und jedes Muster mittels einer beliebigen Anzahl von Merkmalen jedes jeweiligen Punktes klassifizierbar ist.

Wie im ersten Ausführungsbeispiel der vorliegenden Erfindung werden nach dem Erfassen aller Eigenschaften für jeden jeweiligen Punkt diese Eigenschaften miteinander verknüpft, um eine den Polygonzug kennzeichnende Gesamteigenschaft zu erhalten. Eine Verknüpfung dieser Art kann zum Beispiel diejenige sein, die in Gleichung (4) dargestellt ist.

$$\Lambda(a,b) = \tfrac{1}{2}\{\lambda(a,x(a)) + \lambda(b,x(b))\} + \sum_{i=a+1}^{b-1} \lambda(i,x(i)) \tag{4}$$

Dabei stellt $\Lambda(a,b)$ das Maß eines Abstands zwischen Punkten a und b auf dem Polygonzug dar.

Werden die Punkte auf dem Polygonzug als eine geordnete Punktmenge $M = \{x(0), ..., x(n-1)\}$ ausgedrückt, so ergibt sich als Gesamteigenschaft des Polygonzugs unter Verwendung der vorhergehenden Gleichung (4), wobei $a = 0$ und $b = n-1$ gesetzt ist, die Gesamteigenschaft des Polygonzugs:

$$\Lambda(\{M\}) = \Lambda(0,n-1) \tag{5}$$

Soll das Verfahren, wie es bereits zuvor erwähnt worden ist, zum Beispiel in der Lage sein, Muster, die sich nur in ihrer Größe unterscheiden, als gleich zu erkennen, werden nachfolgend alle einzelnen Koordinaten der Punkte der geordneten Menge M mit der Gesamteigenschaft des Polygonzugs reskaliert bzw. normiert, wie es in der folgenden Gleichung (6) dargestellt ist:

$$\{x(0), ..., x(n-1)\} \rightarrow \{x(0)/\Lambda, ..., x(n-1)/\Lambda\} \tag{6}$$

Nachfolgend wird wie in dem ersten Ausführungsbeispiel eine Glättung des Polygonzugs durchgeführt. In diesem zweiten Ausführungsbeispiel wird die Glättung derart durchgeführt, daß ein Mittelungsverfahren durchgeführt wird, das von einem Skalenparameter $\Delta$ ($\Delta > 0$) abhängig ist. Dieser Skalenparameter stellt den Bereich der Mittelung auf dem Pfad durch die geordnete Punktmenge M dar. Desweiteren hängt das Mittelungsverfahren von den zuvor erfaßten Maßen bzw. Eigenschaften $\{\lambda(0), ..., \lambda(n-1)\}$ auf dem Polygonzug ab. Das in diesem zweiten Ausführungsbeispiel verwendete Mittelungsverfahren ist in der folgenden Gleichung (7) dargestellt:

$$x'(i) = \frac{\left\{\sum_{j=i-n/2}^{i} x(j) * p(\Lambda(i,j),\Delta) + \sum_{j=i}^{i+n/2} x(j) * p(\Lambda(i,j),\Delta)\right\}}{\left\{\sum_{j=i-n/2}^{i} p(\Lambda(i,j),\Delta) + \sum_{j=i}^{i+n/2} p(\Lambda(i,j),\Delta)\right\}} \qquad (7)$$

In der vorhergehenden Gleichung (7) stellt x'(i) den Punkt auf dem neuen Polygonzug dar, der aus dem Punkt x(i) auf dem ursprünglichen Polygonzug abgeleitet worden ist, wobei i in Gleichung (7) von 0 bis n-1 läuft und n die Anzahl der Punkte des Polygonzugs darstellt. Der Ausdruck $p(\Lambda(i,j),\Delta)$ in Gleichung (7) stellt eine Gewichtsfunktion dar. Somit wird gemäß diesem zweiten Ausführungsbeispiel die geordnete Punktmenge M' = {x'(0), ..., x'(i), ..., x'(n-1)}, also der neue geglättete Polygonzug, ermittelt, wobei jeder Punkt x'(i) des neuen geglätteten Polygonzugs aus den Koordinaten x(i-1), x(i), x(i+1) der Punkte des ursprünglichen Polygonzugs erhalten wird. Durch die Gewichtsfunktion $p(\Lambda(i,j),\Delta)$ stellt der Punkt x'(i) der Punktmenge M' letztlich eine normierte und gemittelte Summe des Punktes x(i) auf dem ursprünglichen Polygonzug und den ihm benachbarten Punkten x(i-1), x(1+1) dar.

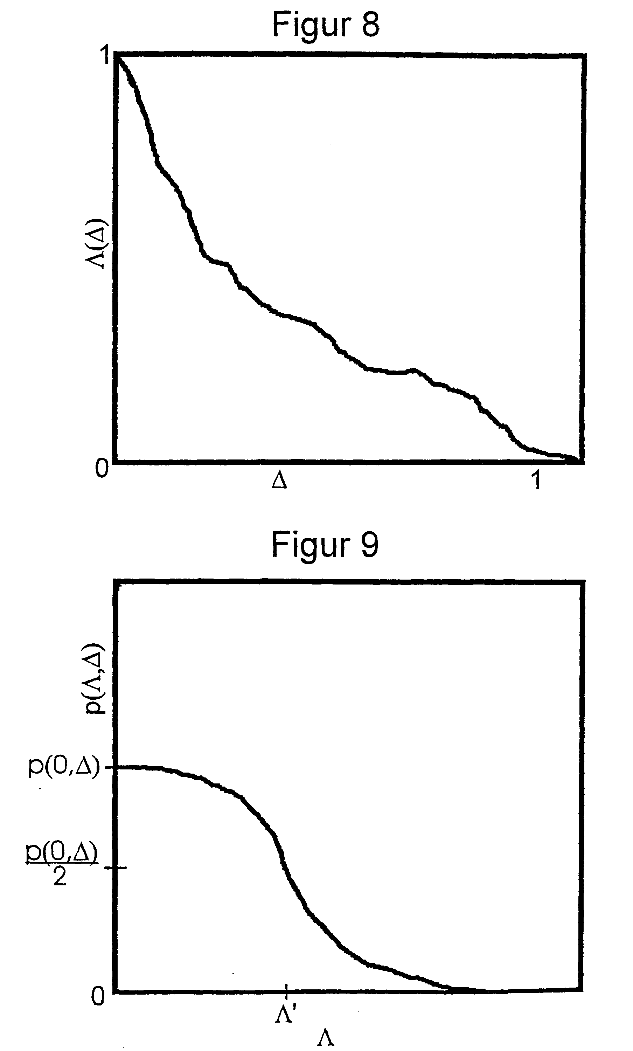

Unter Bezugnahme auf Fig. 9 werden die wesentlichen Eigenschaften dieser Gewichtsfunktion $p(\Lambda(i,j),\Delta)$ beschrieben. Die Gewichtsfunktion $p(\Lambda(i,j),\Delta)$ besitzt beim Maß $\Lambda = 0$ ein Maximum, sie fällt für größer werdende Maße $\Lambda$ stetig gegen Null und das Maß L', bei dem gilt, $p(\Lambda',\Delta) = p(0,\Delta)/2$ nimmt für größere Skalenparameter $\Delta$ zu.

Nach der Glättung des ursprünglichen Polygonzugs und der daraus resultierenden Gewinnung des neuen Polygonzugs werden die Verfahrensschritte ab der Erfassung einer Eigenschaft bzw. eines Maßes für den Polygonzug mit dem neuen Polygonzug (k-1)-mal wiederholt, um somit k Gesamteigenschaften bzw. -maße zu erzielen. Wie es in Fig. 8 gezeigt ist, hängt dabei das Gesamtmaß der Punkte des neuen Polygonzugs von dem verwendeten Skalenparameter $\Delta$ ab, wobei der Skalenparameter $\Delta$ für jeden Durchlauf des Verfahrens unterschiedlich ist. Das heißt, das Muster wird schließlich durch eine Anzahl von k Gesamtmaßen, also einen Vektor mit k Komponenten charakterisiert, wobei die k Gesamtmaße bzw. Komponenten des Vektors also skalenabhängige Gesamtmaße der jeweiligen gemittelten Punktmenge M' darstellen.

Schließlich kann durch Vergleich des Vektors der k Gesamtmaße, der die Signatur des zu klassifizierenden und wiederzuerkennenden Musters darstellt, mit Signaturen bekannter Muster der Gleichheitsgrad zwischen den verglichenen Mustern bestimmt werden.

Wie es durch Vergleich des ersten und zweiten Ausführungsbeispiels ersichtlich ist, ist das Verfahren bei offenen und geschlossenen Polygonzügen anwendbar. Werden geschlossene Polygonzüge verwendet, so ist der Index eines Punktes auf dem Polygonzug immer Modulo der Anzahl der Punkte auf dem Polygonzug zu nehmen. Liegt wie in dem ersten Ausführungsbeispiel ein offener Polygonzug vor, so kann dieser leicht in einen geschlossenen Polygonzug verwandelt werden, indem man an einem Ende des Polygonzugs wieder zurückläuft. Daraus ergibt sich, daß die n Punkte des ursprünglich offenen Polygonzugs zu (n' = n + n - 2) Punkten des neuen geschlossenen Polygonzugs werden, wie es nachfolgend in Gleichung (8) zu sehen ist:

$$\{x(0), x(1), ..., x(n-2), x(n-1), x(n-2), ...,x(1)\} \qquad (8)$$

Eine vorteilhafte Ausgestaltung des erfindungsgemäßen Verfahrens besteht desweiteren darin, daß statt "scharfer" Größen für die Vektoren bekannter Muster "unscharfe" Mengen verwendet werden, deren Verteilung von dem Mustererkennungsverfahren gelernt werden kann. Dadurch ist es möglich, die Erkennungswahrscheinlichkeit bedeutsam zu erhöhen.

Ein praktischer Anwendungsfall des erfindungsgemäßen Verfahrens, bei dem eine Mustererkennung mit geringer Rechenleistung (auch für fraktale Muster) wünschenswert ist, besteht zum Beispiel darin, eine kostensparende aber dennoch überaus sichere Zugangskontrolle zu schaffen, bei der lediglich eine handelsübliche Datenverarbeitungseinrichtung (Personalcomputer) und ein Graphiktablett zur handschriftlichen Eingabe von Symbolen benötigt werden.

Diese eingegebenen Symbole definieren in ihrer Form und in ihrem zeitlichen Entstehungsprozeß Muster (Polygonzüge im m-dimensionalen Raum), mittels welchen der Benutzer eindeutig identifiziert werden kann. Die Verallgemeinerung des traditionellen Paßworts auf diese Muster hat den entscheidenden Vorteil, daß allein über die Kenntnis der Form kein Zugang erfolgen kann.

Ferner ist diese Methode nicht an länderspezifische Buchstaben gebunden, da lediglich Muster und nicht semantische Inhalte geprüft werden. Außerdem erlaubt es die Reichhaltigkeit an Mustern in Zeit und Raum, auf andere Zugriffskontrollmechanismen (z.B., Chip- oder Magnetkarten) zu verzichten, da diese schwierig vor Verlust zu schützen sind.

**Patentansprüche**

1. Verfahren zum Klassifizieren und Wiedererkennen von Mustern, das die folgenden Schritte aufweist:

   **[a]** Erstellen eines zu klassifizierenden und wiederzuerkennenden Musters eines m-dimensionalen Objekts, wobei das zu klassifizierende und wiederzuerkennende Objekt in der Form eines m-dimensionalen Polygonzugs vorliegt;

   **[b]** Erfassen einer Eigenschaft für jeden Punkt des Polygonzugs, wobei die Eigenschaft so definiert ist, daß sie eindeutig eine Beziehung eines jeweiligen Punktes zu dem ihm vorhergehenden Punkt und dem ihm nachfolgenden Punkt auf dem Polygonzug widerspiegelt;

   **[c]** Verknüpfen der Eigenschaften für jeden Punkt des Polygonzugs in der Weise, daß eine den Polygonzug eindeutig kennzeichnende Gesamteigenschaft erhalten wird;

   **[d]** Glätten des Polygonzugs zur Ausbildung eines neuen Polygonzugs;

   **[e]** (k-1)-faches Wiederholen der Schritte **[b]** bis **[d],** wobei k eine Ganzzahl ist;

   **[f]** Erzeugen einer Signatur für das Muster unter Verwendung der im Schritt **[c]** gewonnenen k Gesamteigenschaften; und

   **[g]** Vergleichen der Signatur des Musters mit Signaturen von bekannten Mustern zur Feststellung eines Gleichheitsgrads zwischen den verglichenen Signaturen.

2. Verfahren nach Anspruch 1, *dadurch gekennzeichnet, daß* die im Schritt **[c]** gewonnenen Gesamteigenschaften mit der im ersten Durchlauf durch den Schritt **[c]** gewonnenen Gesamteigenschaft normiert werden.

3. Verfahren nach Anspruch 2, *dadurch gekennzeichnet, daß* die im Schritt **[c]** durchgeführte Verknüpfung eine Aufsummation der Eigenschaften für jeden Punkt des Polygonzugs ist.

4. Verfahren nach Anspruch 3, *dadurch gekennzeichnet, daß* die erfaßte Eigenschaft eine Länge ist und die k Gesamteigenschaften k Gesamtlängen des jeweiligen Polygonzugs sind.

5. Verfahren nach Anspruch 4, *dadurch gekennzeichnet, daß* die Längen Euklidsche Längen von Segmenten des Polygonzugs sind.

6. Verfahren nach Anspruch 5, *dadurch gekennzeichnet, daß* der Schritt **[d]** des Glättens des Polygonzugs so durchgeführt wird, daß jeder Punkt des neuen Polygonzugs durch einen funktionalen Zusammenhang bestimmt wird, der jeden Punkt des neuen Polygonzugs auf der Grundlage des im entsprechenden Punktes des letzten Polygonzugs, mindestens des dem entsprechenden Punkt vorhergehenden Punktes und mindestens des dem entsprechenden Punkt nachfolgenden Punktes auf dem letzten Polygonzug bestimmt.

7. Verfahren nach Anspruch 6, *dadurch gekennzeichnet, daß* das Glätten so durchgeführt wird, daß eine Mittelung jedes Punktes des neuen Polygonzugs in Abhängigkeit eines Mittelungsbereichs auf dem letzten Polygonzug durchgeführt wird.

8. Verfahren nach Anspruch 7, *dadurch gekennzeichnet, daß* der Schritt **[e]** des Wiederholens der Schritte **[b]** bis **[d]** so durchgeführt wird, daß unterschiedliche Mittelungsbereiche verwendet werden.

**9.** Verfahren nach Anspruch 8, *dadurch gekennzeichnet, daß* die Mittelung einen gewichtenden funktionalen Zusammenhang aufweist, so daß jeder Punkt des neuen Polygonzugs eine gewichtete Summe des im entsprechenden Punktes des letzten Polygonzugs, mindestens des dem entsprechenden Punkt vorhergehenden Punktes und mindestens des dem entsprechenden Punkt nachfolgenden Punktes auf dem letzten Polygonzug darstellt.

**10.** Verfahren nach Anspruch 9, *dadurch gekennzeichnet, daß* die Signaturen bekannter Muster zur Erhöhung der Erkennungswahrscheinlichkeit eine statistische Verteilung aufweisen, die das Verfahren erkennt.

**Claims**

**1.** Method for classifying and recognising patterns, which includes the following steps:

[a] producing a pattern to be classified and recognised of an m-dimensional object, said object to be classified and recognised being provided in the form of an m-dimensional traverse;

[b] acquiring a property for every point of the traverse, whereby the property is defined such that it unambiguously reflects a relationship between a respective point and the point preceding it and the point succeeding it on the traverse;

[c] linking the properties for every point of said traverse in such a manner that an overall property unambiguously characterising said traverse is obtained;

[d] smoothing said traverse in order to form a new traverse;

[e] (k-1) times repeating steps [b] to [d], wherein k is an integer;

[f] generating a signature for said pattern by utilising said k overall properties obtained in step [c]; and

[g] comparing said signature of said pattern to signatures of known patterns for ascertaining a degree of similarity of the compared signatures.

**2.** Method according to claim 1, *characterised in that* the overall properties obtained in step [c] are normalised by means of said overall property obtained in the first pass by step [c].

**3.** Method according to claim 2, *characterised in that* said linking performed in step [c] is an addition of the properties for every point of the traverse.

**4.** Method according to claim 3, *characterised in that* said acquired property is a length, and said k overall properties are k overall lengths of the respective traverse.

**5.** Method according to claim 4, *characterised in that* said lengths are Euclidean lengths of segments of said traverse.

**6.** Method according to claim 5, *characterised in that* step [d] of smoothing said traverse is performed such that every point of the new traverse is determined by a functional relationship which determines every point of said new traverse on the basis of the corresponding point of the previous traverse, at least the point preceding the respective point and at least the point succeeding the corresponding point on said previous traverse.

**7.** Method according to claim 6, *characterised in that* smoothing is performed such that averaging of every point of said new traverse is performed in accordance with an averaging range on said previous traverse.

**8.** Method according to claim 7, *characterised in that* step [e] of repeating steps [b] to [d] is performed by employing different averaging ranges.

**9.** Method according to claim 8, *characterised in that* averaging includes a weighting functional relationship such that every point of said new traverse represents a weighted sum of the corresponding point of the previous traverse, at least the point preceding the respective point, and at least the point succeeding the respective point on the previous traverse.

10. Method according to claim 9, ***characterised in that*** in order to increase probability of recognition, the signatures of known patterns have a statistic distribution which is recognised by said method.

**Revendications**

1. Procédé pour classer et identifier à nouveau des modèles, ce procédé comprenant les étapes suivantes:

   [a] établissement d'un modèle devant être classé et à nouveau identifié, d'un objet à m dimensions, l'objet devant être classé et à nouveau identifié se présentant sous la forme d'un tracé polygonal à m dimensions;
   [b] détection d'une caractéristique pour chaque point du tracé polygonal, la caractéristique étant définie de telle sorte qu'elle reproduit de façon nette une relation entre un point respectif et le point qui le précède et le point, qui lui succède, sur le tracé polygonal;
   [c] combinaison des caractéristiques pour chaque point du tracé polygonal de manière à obtenir une caractéristique commune caractérisant de façon nette le tracé polygonal;
   [d] lissage du tracé polygonal pour former un nouveau tracé polygonal;
   [e] répétition (k-1) fois des étapes [b] à [d], k étant un nombre entier;
   [f] production d'une signature pour le modèle moyennant l'utilisation des k caractéristiques complètes obtenues lors de l'étape [c]; et
   [g] comparaison de la signature du modèle à des signatures de modèles connus pour déterminer un degré d'identité entre les signatures comparées.

2. Procédé selon la revendication 1, **caractérisé en ce que** les caractéristiques complètes obtenues lors de l'étape [c] sont normalisées avec la caractéristique complète obtenue lors de la première exécution avec l'étape [c] .

3. Procédé selon la revendication 2, **caractérisé en ce que** la combinaison exécutée lors de l'étape [c] est une sommation des caractéristiques pour chaque point du tracé polygonal.

4. Procédé selon la revendication 3, **caractérisé en ce que** la caractéristique détectée est une longueur et les k caractéristiques complètes sont k longueurs totales du tracé polygonal respectif.

5. Procédé selon la revendication 4, **caractérisé en ce que** des longueurs sont des longueurs euclidiennes de segments du tracé polygonal.

6. Procédé selon la revendication 5, **caractérisé en ce que** l'étape [d] de lissage du tracé polygonal est exécutée de telle sorte que chaque point du nouveau tracé polygonal est déterminé par une relation fonctionnelle, qui détermine chaque point du nouveau tracé polygonal sur la base du point correspondant du dernier tracé polygonal, au moins du point qui précède le point correspondant et au moins du point du suit le point correspondant, sur le dernier tracé polygonal.

7. Procédé selon la revendication 6, **caractérisé en ce que** le lissage est exécuté de telle sorte qu'une formation de la moyenne de chaque point du nouveau tracé polygonal est exécutée en fonction d'une zone de formation de la moyenne sur le dernier tracé polygonal.

8. Procédé selon la revendication 7, **caractérisé en ce que** l'étape [e] de répétition des étapes [b] à [d] est exécutée par le fait qu'on utilise des gammes différentes de formation de la moyenne.

9. Procédé selon la revendication 8, **caractérisé en ce que** la formation de la moyenne comporte une relation fonctionnelle de pondération de sorte que chaque point du nouveau tracé polygonal représente une somme pondérée du point correspondant du dernier tracé polygonal, au moins du point précédent au point correspondant et au moins du point, qui suit le point correspondant, sur le dernier tracé polygonal.

10. Procédé selon la revendication 9, **caractérisé en ce que** les signatures de modèles connus comportent, pour accroître la probabilité d'identification, une distribution statistique, qui identifie le procédé.

Figur 1(a)

Original

Figur 1(b)

Schritt 1

Figur 1(c)

Schritt 2

Figur 1(d)

Schritt 3

Figur 2

Länge

Anzahl der Schritte

Muster

Signatur

Figur 3(a)

Figur 4(a)

"fraktal"

Figur 3(b)

Figur 4(b)

"glatt"

EP 0 843 864 B1

Figur 5

x(0)    x(1)

x(n-1)    x(2)

x(n-2)    x(3)

...    x(4)

Figur 6

x(0)    x(1)

$\lambda(1)$

x(n-1)    x(2)

x(n-2)    x(3)

...    x(4)

Figur 7

x(0)    x(1)

$\lambda(1)$

x(n-1)    x(2)

x(n-2)    x(3)

...    x(4)

# Figur 8

# Figur 9